# FASCICULE DE BREVET EUROPEEN

(11) **EP 2 983 969 B1**
(45) Date de publication et mention de la délivrance du brevet: **26.07.2017**
(21) Numéro de dépôt: 14716892.6
(22) Date de dépôt: 19.03.2014
(51) Int. Cl.: B62D 35/00

(54) **DEFLECTEUR AERODYNAMIQUE POUR PARTIE ARRIERE D'UN VEHICULE**
AERODYNAMISCHER DEFLEKTOR FÜR DEN HINTEREN TEIL EINES FAHRZEUGS
AERODYNAMIC DEFLECTOR FOR THE REAR PART OF A VEHICLE

(30) Priorité: 08.04.2013 FR 1353116
(43) Date de publication de la demande: 17.02.2016
(73) Titulaire: Peugeot Citroën Automobiles SA, 78140 Vélizy Villacoublay (FR)
(72) Inventeur: BERGER, Flavien, F-25630 Sainte Suzanne (FR); LANCEMOT, Amandine, F-25250 Blussans (FR)
(74) Mandataire: Fosse, Danièle
(86) Numéro de dépôt international: PCT/FR2014/050638
(87) Numéro de publication internationale: WO 2014/167198

(56) Documents cités:
- DE-A1- 3 011 652
- DE-A1- 10 315 885
- DE-A1- 19 807 158
- DE-U1- 29 720 872
- FR-A1- 2 856 974
- FR-A1- 2 880 324
- GB-A- 2 326 852

## Description

L'invention concerne un déflecteur aérodynamique pour partie arrière d'un véhicule automobile destiné à être agencé au moins en partie au dessous du soubassement. Le document DE 103 15 885 A1 divulgue un déflecteur selon le préambule de la revendication 1. Ce type de déflecteur comporte généralement une portion avant adaptée pour être reliée sur le soubassement du véhicule par un moyen de liaison mécanique, et une portion arrière adaptée pour être reliée sur un pare-chocs arrière, ou bouclier arrière, du véhicule.

Avantageusement, le déflecteur présente une forme aérodynamique pour améliorer les caractéristiques d'écoulement de l'air de la partie arrière du véhicule.

On constate qu'en cas de choc contre le déflecteur, notamment en cas de choc suivant un axe globalement vertical et perpendiculaire au soubassement du véhicule, le soubassement risque de se casser, ou se détériorer, à l'emplacement de la jonction avec le moyen de liaison mécanique du déflecteur sur le soubassement.

Ce type de choc peut se produire lorsque le véhicule chargé descend un obstacle, comme un trottoir, qui appuie verticalement contre le déflecteur du bas vers le haut.

Le risque de détérioration du soubassement est surtout constaté lorsque le déflecteur est relié directement sur le plancher du soubassement, notamment lorsque le plancher est un plancher de faible résistance mécanique, comme un plancher dit « faible densité » en matériau composite par exemple.

Le plancher est une pièce onéreuse et couteuse à changer qu'il convient de protéger.

Le document EP-A1-1653114 décrit et représente une boîte-tampon tubulaire conçue pour équiper un véhicule afin d'absorber axialement une énergie d'impact par flambage en cas de choc du véhicule.

La géométrie de la boîte-tampon est adaptée pour se déformer et absorber au moins en partie le choc en cas de collision par l'avant, par l'arrière ou par le côté du véhicule, afin de protéger les passagers situés dans l'habitacle.

Bien que ce type de boîte-tampon permette de protéger les passagers, il n'est pas adapté pour relier un soubassement et un déflecteur arrière entre eux.

L'invention vise notamment à proposer un déflecteur pour partie arrière d'un véhicule automobile qui permet de protéger le soubassement, ou plancher, sur lequel il est relié.

Dans ce but, l'invention propose un déflecteur pour partie arrière d'un véhicule, qui est agencé au moins en partie au dessous du soubassement du véhicule et qui comporte au moins un moyen de liaison mécanique conçu pour relier le déflecteur sur le soubassement, caractérisé en ce que le moyen de liaison mécanique comporte un amortisseur de choc qui est conçu pour absorber au moins une partie d'un effort axial transmis depuis le déflecteur vers le soubassement du véhicule, suivant au moins un axe d'absorption globalement perpendiculaire au soubassement, en cas de choc contre le déflecteur.

Cette caractéristique selon l'invention permet au déflecteur de limiter l'effort transmis au soubassement, ou plancher, par le déflecteur, de façon à préserver le soubassement.

Selon une autre caractéristique de l'invention, le moyen de liaison mécanique du déflecteur sur le soubassement présente une forme tubulaire qui s'étend suivant l'axe d'absorption et qui comporte :
- une extrémité inférieure formant embase reliée sur le déflecteur,
- un tronçon intermédiaire tubulaire axial formant amortisseur de choc, et
- une extrémité supérieure reliée sur le soubassement.

De plus, le moyen de liaison présente une forme globalement tronconique de section radiale décroissante suivant l'axe d'absorption, depuis l'extrémité inférieure vers l'extrémité supérieure du moyen de liaison.

Aussi, l'amortisseur de choc présente un affaiblissement mécanique conçu pour permettre la déformation du moyen de liaison suivant au moins l'axe d'absorption, en cas de choc contre le déflecteur.

La déformation de l'amortisseur permet d'absorber au moins une partie de l'effort du choc transmis au soubassement par le déflecteur.

De plus, l'affaiblissement mécanique consiste en une pluralité de fentes axiales qui sont ménagées sur le tronçon intermédiaire du moyen de liaison mécanique, qui sont réparties de manière régulière autour de l'axe d'absorption et qui sont conçues pour permettre un affaissement axial du moyen de liaison.

Ce type d'affaiblissement mécanique présente notamment l'avantage d'être facilement réalisable, par usinage ou directement lors moulage du moyen de liaison.

En outre, l'amortisseur présente une résistance mécanique inférieure à la résistance mécanique de la zone du soubassement sur laquelle le moyen de liaison est relié, au moins suivant l'axe d'absorption, pour protéger le soubassement d'une détérioration.

Enfin, le moyen de liaison mécanique, l'amortisseur de choc et le déflecteur sont réalisés venus de matière en une seule pièce.

L'invention concerne aussi un véhicule équipé d'un déflecteur du type décrit précédemment.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'ensemble, qui illustre un véhicule automobile équipé d'un déflecteur arrière selon l'invention ;
- la figure 2 est une vue en perspective de trois-quarts de dessous, qui illustre le déflecteur de la figure 1 relié sur le pare-chocs arrière et sur le plancher du véhicule ;
- la figure 3 est une vue en coupe axiale longitudinale, qui illustre le moyen de liaison mécanique du déflecteur de la figure 1 sur le plancher du véhicule ;
- la figure 4 est une vue de détail en perspective, qui illustre un amortisseur de choc du moyen de liaison dans un état initial ;
- la figure 5 est une vue de détail en perspective similaire à celle de la figure 4, qui illustre l'amortisseur de choc de la figure 4 dans un état déformé ;
- la figure 6 est une vue en perspective de dessous, qui illustre le déflecteur de la figure 1 réalisé en une seule pièce.

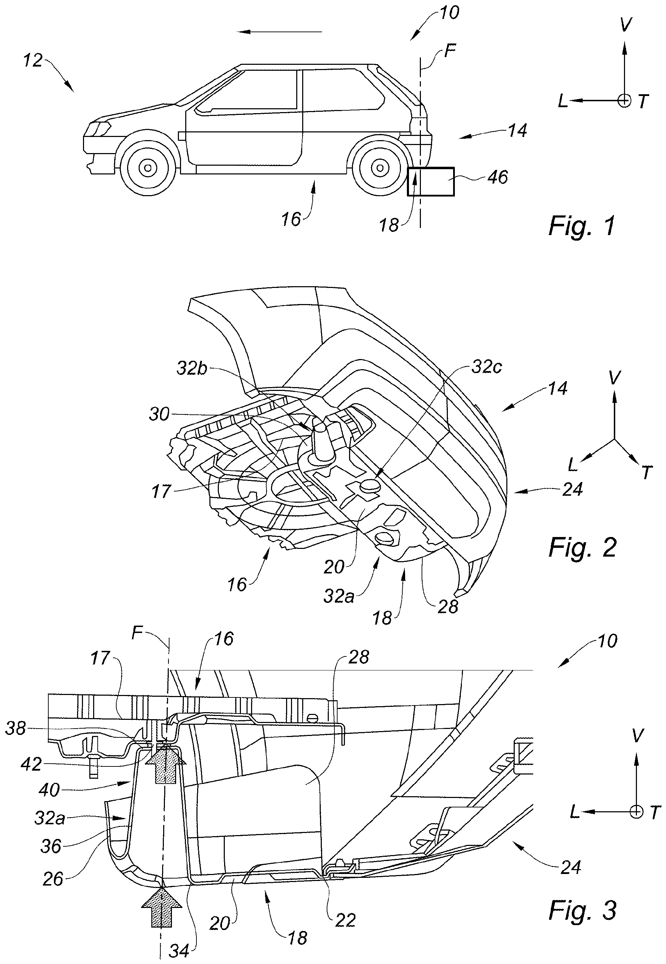

Dans la description et les revendications, on utilisera à titre non limitatif les expressions « supérieur », « inférieur » et « bas », « haut » en référence à la partie supérieure et à la partie inférieure respectivement des figures 1 et 3.

De plus, pour clarifier la description et les revendications, on adoptera à titre non limitatif la terminologie longitudinal, vertical et transversal en référence au trièdre L, V, T indiqué aux figures.

On a représenté à la figure 1 un véhicule 10 qui s'étend longitudinalement suivant une direction d'avancement du véhicule 10, depuis une partie avant 12 agencée sur la partie gauche de la figure 1, jusqu'à une partie arrière 14 agencée sur la partie droite de la figure 1.

Le véhicule 10 est équipé d'un soubassement 16 qui s'étend globalement parallèlement à la surface de roulement du véhicule 10, et qui comporte un plancher 17 situé dans la partie arrière 14 du véhicule 10.

Le plancher 17 est ici un plancher dit « plancher de charge », du type faible densité réalisé en matériau composite.

Comme on peut le voir aux figures 2, 3 et 6, le véhicule 10 comporte un déflecteur 18 arrière qui est agencé au dessous de la partie arrière 14 du véhicule 10, notamment pour améliorer l'aérodynamisme du véhicule 10 et pour protéger le soubassement 16 d'éventuelles projections, comme des projections de graviers.

Le déflecteur 18 est composé essentiellement par une plaque 20 de protection qui s'étend au dessous du plancher 17, globalement parallèlement au plancher 17, un bord arrière 22 transversal qui est fixé sur un pare-chocs arrière 24, un bord avant 26 transversal, un premier bord latéral 28 et un second bord latéral 30.

Le bord avant 26, le premier bord latéral 28 et le second bord latéral 30 s'étendent chacun globalement verticalement depuis la plaque 20 du déflecteur 18, vers le plancher 17, de façon à améliorer l'aérodynamisme du véhicule 10.

Selon un autre aspect, le déflecteur 18 comporte trois moyens de liaison 32a, 32b, 32c qui sont conçus pour relier le déflecteur 18 sur le plancher 17 du véhicule 10.

Pour ne pas surcharger la description, seul le moyen de liaison 32a qui est agencé le plus en avant sur le déflecteur 18, est décrit par la suite, les deux autres moyens de liaison 32b, 32c étant similaires.

Selon la figure 3, le moyen de liaison 32a présente une forme tubulaire qui s'étend suivant l'axe F d'absorption et qui comporte une extrémité inférieure formant embase 34 reliée sur la plaque 20 du déflecteur 18, un tronçon intermédiaire 36 tubulaire axial, et une extrémité supérieure 38 reliée sur le plancher 17.

L'extrémité supérieure 38 est ici reliée sur le plancher 17 par un harpon 40. Toutefois, l'extrémité supérieure 38 peut être reliée sur le plancher 17 par tout type de liaison mécanique adapté, comme une liaison par coopération de forme ou par vis-écrou par exemple.

Le moyen de liaison 32a présente une forme globalement tronconique de section radiale sensiblement décroissante du bas vers le haut suivant l'axe F d'absorption.

De plus, le tronçon intermédiaire 36 du moyen de liaison 32a forme un amortisseur 40 de choc qui est conçu pour absorber au moins une partie d'un effort axial transmis depuis le déflecteur 18 vers le plancher 17 du véhicule 10, suivant un axe F d'absorption globalement perpendiculaire au plancher 17, en cas de choc contre le déflecteur 18.

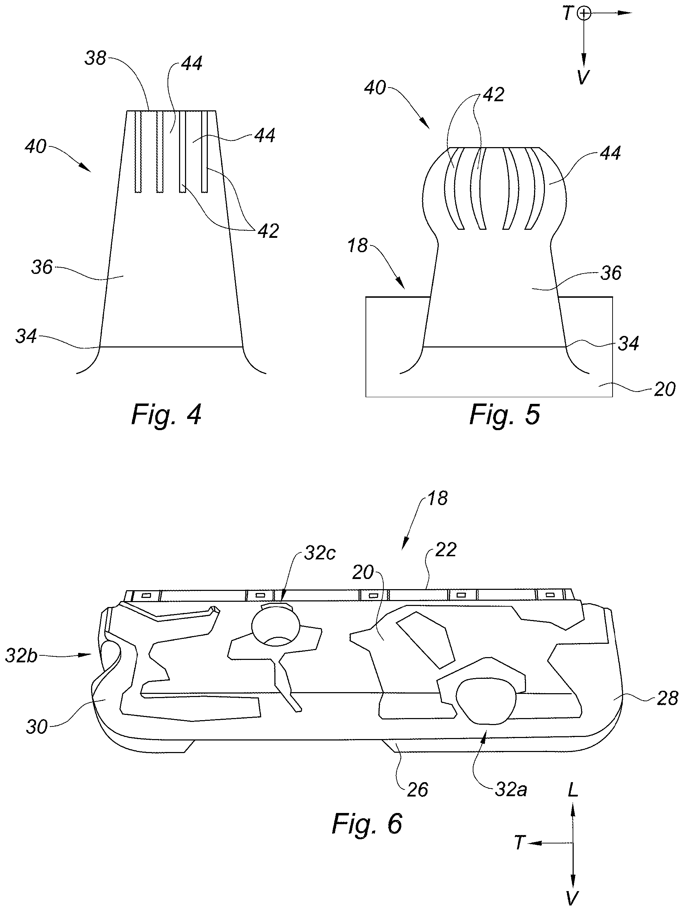

A cet effet, comme on peut le voir à la figure 4, l'amortisseur 40 de choc présente un affaiblissement mécanique conçu pour protéger le plancher 17 en permettant la déformation du moyen de liaison 32a suivant l'axe F d'absorption.

L'affaiblissement mécanique consiste en une pluralité de fentes 42 axiales qui sont ménagées sur le tronçon intermédiaire 36 du moyen de liaison 32a, les fentes 42 délimitant une série de pattes 44 axiales de liaison.

Les fentes 42 sont réparties de manière régulière autour de l'axe F d'absorption et elles sont conçues pour permettre un affaissement axial du moyen de liaison 32a suivant l'axe F d'absorption du choc.

Avantageusement, les fentes 42 peuvent être aisément réalisables sur un moyen de liaison préexistant par usinage par exemple.

De même, les fentes 42 peuvent être réalisées directement par moulage au cours de la fabrication du moyen de liaison 32a.

L'amortisseur 40 est représenté à la figure 4 dans un état initial dans lequel les pattes 44 formées par les fentes 42 s'étendent de façon rectiligne dans le prolongement du tronçon intermédiaire 36 du moyen de liaison 32a.

A l'inverse, l'amortisseur 40 est représenté à la figure 5 dans un état déformé suite à un choc sur le déflecteur 18, dans lequel chaque patte 44 a flambé radialement vers l'extérieur du moyen de liaison 32a.

Le passage de l'état initial à l'état déformé permet à l'amortisseur 40 d'absorber une partie de l'effort transmis depuis le déflecteur 18 vers le plancher 17.

Comme on peut le voir à la figure 1, ce type de choc peut intervenir lorsque le véhicule 10 descend un trottoir 46 et que le trottoir 46 appuie axialement vers le haut contre le déflecteur 18 selon l'axe F d'absorption.

L'amortisseur 40 est conçu pour présenter une résistance mécanique inférieure à la résistance mécanique de la portion du plancher 17 qui est reliée sur le moyen de laison 32a du déflecteur 18, au moins suivant l'axe F d'absorption, de sorte que l'amortisseur 40 se déforme à la place du plancher 17, pour protéger le plancher 17 d'une détérioration.

De plus, les pattes 44 de liaison sont conçues pour se déformer plastiquement, ou élastiquement, sans rompre, grâce à quoi le déflecteur 18 reste fixé sur le plancher 17 du véhicule 10 après déformation des pattes 44.

A cet effet, l'amortisseur 40 est de préférence réalisé en matériau plastique.

De plus, le moyen de liaison 32a du déflecteur 18, l'amortisseur 40 et le déflecteur 18 sont réalisés venus de matière en une seule pièce, par exemple par moulage en injection plastique.

## Revendications

1. Déflecteur (18) pour partie arrière d'un véhicule (10), qui est agencé au moins en partie au dessous du soubassement (16) du véhicule (10) et qui comporte au moins un moyen de liaison (32a) mécanique conçu pour relier le déflecteur (18) sur le soubassement (16), le moyen de liaison (32a) mécanique comportant un amortisseur (40) de choc qui est conçu pour absorber au moins une partie d'un effort axial transmis depuis le déflecteur (18) vers le soubassement (16) du véhicule (10), suivant au moins un axe (F) d'absorption globalement perpendiculaire au soubassement (16), en cas de choc contre le déflecteur (18), **caractérisé en ce que** le moyen de liaison (32a) mécanique du déflecteur (18) sur le soubassement (16) présente une forme tubulaire qui s'étend suivant l'axe (F) d'absorption et qui comporte :
- une extrémité inférieure (34) formant embase reliée sur le déflecteur (18),
- un tronçon intermédiaire (36) tubulaire axial formant amortisseur (40) de choc, et
- une extrémité supérieure (38) reliée sur le soubassement (16).

2. Déflecteur (18) pour partie arrière d'un véhicule (10) selon la revendication 1, **caractérisé en ce que** le moyen de liaison (32a) présente une forme globalement tronconique de section radiale décroissante suivant l'axe (F) d'absorption, depuis l'extrémité inférieure (34) vers l'extrémité supérieure (38) du moyen de liaison (32a).

3. Déflecteur (18) pour partie arrière d'un véhicule (10) selon l'une quelconque des revendications précédentes, **caractérisé en ce que** l'amortisseur (40) de choc présente un affaiblissement mécanique conçu pour permettre la déformation du moyen de liaison (32a) suivant au moins l'axe (F) d'absorption, en cas de choc contre le déflecteur (18).

4. Déflecteur (18) pour partie arrière d'un véhicule (10) selon la revendication 3, **caractérisé en ce que** l'affaiblissement mécanique consiste en une pluralité de fentes (42) axiales qui sont ménagées sur le tronçon intermédiaire (36) du moyen de liaison (32a) mécanique, qui sont réparties de manière régulière autour de l'axe (F) d'absorption et qui sont conçues pour permettre un affaissement axial du moyen de liaison (32a).

5. Déflecteur (18) pour partie arrière d'un véhicule (10) selon l'une quelconque des revendications précédentes, **caractérisé en ce que** l'amortisseur (40) présente une résistance mécanique inférieure à la résistance mécanique de la zone du soubassement (16) sur laquelle le moyen de liaison (32a) est relié, au moins suivant l'axe (F) d'absorption, pour protéger le soubassement (16) d'une détérioration.

6. Déflecteur (18) pour partie arrière d'un véhicule (10) selon l'une quelconque des revendications précédentes, **caractérisé en ce que** le moyen de liaison (32a) mécanique, l'amortisseur (40) de choc et le déflecteur (18) sont réalisés venus de matière en une seule pièce.

7. Véhicule (10) équipé d'un déflecteur (18) selon l'une quelconque des revendications précédentes.

## Patentansprüche

1. Deflektor (18) für Heckteil eines Fahrzeugs (10), der mindestens zum Teil unter dem Unterbau (16) des Fahrzeugs (10) eingerichtet ist und mindestens ein mechanisches Verbindungsmittel (32a) umfasst, das konzipiert ist, um den Deflektor (18) auf dem Unterbau (16) zu verbinden, wobei das mechanische Verbindungsmittel (32a) einen Stoßfänger (40) umfasst, der konzipiert ist, um mindestens einen Teil einer axialen Kraft, die von dem Deflektor (18) zu dem Unterbau (16) des Fahrzeugs (10) übertragen wird, gemäß mindestens einer Absorptionsachse (F), die insgesamt zu dem Unterbau (16) senkrecht ist, bei einem Aufprall gegen den Deflektor (18) zu absorbieren, **dadurch gekennzeichnet, dass** das mechanische Verbindungsmittel (32a) des Deflektors (18) auf dem Unterbau (16) eine Röhrenform aufweist, die sich entlang der Absorptionsachse (F) erstreckt und Folgendes umfasst:
- ein unteres Ende (34), das einen Sockel bildet, der auf dem Deflektor (18) verbunden ist,
- einen axialen röhrenförmigen Zwischenabschnitt (36), der einen Stoßfänger (40) bildet, und
- ein oberes Ende (38), das auf dem Unterbau (16) verbunden ist.

2. Deflektor (18) für Heckteil eines Fahrzeugs (10) nach Anspruch 1, **dadurch gekennzeichnet, dass** das Verbindungsmittel (32a) eine insgesamt kegelstumpfförmige Form mit radialem Querschnitt, der entlang der Absorptionsachse (F), von dem unteren Ende (34) zu dem oberen Ende (38) des Verbindungsmittels (32a) abnimmt, aufweist.

3. Deflektor (18) für Heckteil eines Fahrzeugs (10) nach einem der vorhergehenden Ansprüche, **dadurch gekennzeichnet, dass** der Stoßfänger (40) eine mechanische Schwächung aufweist, die konzipiert ist, um die Verformung des Verbindungsmittels (32a) entlang mindestens der Absorptionsachse (F) bei einem Aufprall gegen den Deflektor (18) zu erlauben.

4. Deflektor (18) für Heckteil eines Fahrzeugs (10) nach Anspruch 3, **dadurch gekennzeichnet, dass** die mechanische Schwächung aus einer Vielzahl axialer Schlitze (42) besteht, die auf dem Zwischenabschnitt (36) des mechanischen Verbindungsmittels (32a) eingerichtet sind, die regelmäßig um die Absorptionsachse (F) verteilt und konzipiert sind, um eine axiale Schwächung des Verbindungsmittel (32a) zu erlauben.

5. Deflektor (18) für Heckteil eines Fahrzeugs (10) nach einem der vorhergehenden Ansprüche, **dadurch gekennzeichnet, dass** der Stoßfänger (40) eine mechanische Festigkeit, die niedriger ist als die mechanische Festigkeit der Zone des Unterbaus (16), auf der das Verbindungsmittel (32a) verbunden ist, mindestens entlang der Absorptionsachse (F) aufweist, um den Unterbau (16) vor einer Beschädigung zu schützen.

6. Deflektor (18) für Heckteil eines Fahrzeugs (10) nach einem der vorhergehenden Ansprüche, **dadurch gekennzeichnet, dass** das mechanische Verbindungsmittel (32a), der Stoßfänger (40) und der Deflektor (18) aus einem einzigen Teil hergestellt sind.

7. Fahrzeug (10), das mit einem Deflektor (18) nach einem der vorhergehenden Ansprüche ausgestattet ist.

## Claims

1. A deflector (18) for the rear part of a vehicle (10), which is arranged at least partially beneath the underbody (16) of the vehicle (10) and which comprises at least one mechanical link means (32a) designed to link the deflector (18) to the underbody (16), the mechanical link means (32a) comprising a shock absorber (40) which is designed to absorb at least a portion of an axial force transmitted from the deflector (18) to the underbody (16) of the vehicle (10), along at least one absorption axis (F) that is generally perpendicular to the underbody (16), in the case of an impact against the deflector (18), **characterized in that** the mechanical link means (32a) of the deflector (18) to the underbody (16) has a tubular shape which extends along the absorption axis (F) and which comprises:
- a lower end (34) forming a base connected to the deflector (18),
- an intermediate axial tubular portion (36) forming the shock absorber (40), and
- an upper end (38) connected to the underbody (16).

2. The deflector (18) for the rear part of a vehicle (10) according to claim 1, **characterized in that** the link means (32a) has a generally frustoconical shape of decreasing radial section along the absorption axis (F), from the lower end (34) toward the upper end (38) of the link means (32a).

3. The deflector (18) for the rear part of a vehicle (10) according to any one of the preceding claims, **characterized in that** the shock absorber (40) has a mechanical weakening designed to permit the deformation of the link means (32a) along at least the absorption axis (F), in the case of an impact against the deflector (18).

4. The deflector (18) for the rear part of a vehicle (10) according to claim 3, **characterized in that** the mechanical weakening consists in a plurality of axial slits (42) which are arranged on the intermediate portion (36) of the mechanical link means (32a), which are distributed in a regular manner around the absorption axis (F) and which are designed to permit an axial weakening of the link means (32a).

5. The deflector (18) for the rear part of a vehicle (10) according to any one of the preceding claims, **characterized in that** the shock absorber (40) has a lower mechanical resistance than the mechanical resistance of the zone of the underbody (16) to which the link means (32a) is connected, at least along the absorption axis (F), to protect the underbody (16) from deterioration.

6. The deflector (18) for the rear part of a vehicle (10) according to any one of the preceding claims, **characterized in that** the mechanical link means (32a), the shock absorber (40) and the deflector (18) are formed as an integral part in a single piece.

7. A vehicle (10) equipped with a deflector (18) according to any one of the preceding claims.
